# EUROPEAN PATENT SPECIFICATION

(11) **EP 1 457 441 B1**
(45) Date of publication and mention of the grant of the patent: **17.11.2010**
(21) Application number: 04101038.0
(22) Date of filing: 12.03.2004
(51) Int. Cl.: B65G 47/88

(54) **Roller conveyor with a stopping device**
Rollenförderer mit einer Auflaufeinrichtung
Convoyeur à rouleaux comprenant un dispositif d'arrêt

(30) Priority: 14.03.2003 IT TO20030193
(43) Date of publication of application: 15.09.2004
(73) Proprietor: OMA S.r.l., 37069 Villafranca di Verona (IT)
(72) Inventor: Baldi, Giampietro, 37069 Villafranca di Verona (IT)
(74) Representative: Jorio, Paolo

(56) References cited:
- DE-A- 2 055 613
- DE-A- 3 916 334
- US-A- 5 070 987

## Description

The present invention relates to a roller conveyor.

More specifically, the present invention relates to a roller conveyor with movable product stops, of the type used in packing systems for conveying a succession of loose boxed products to a pallet-loading machine; to which application, the following disclosure refers purely by way of example.

As is known, in the packing industry, roller conveyors are often used to transfer boxed products from one machine to another, and normally comprise a supporting frame; a number of supporting rollers arranged parallel and side by side on the supporting frame, and which rotate freely to define a normally horizontal conveying surface; and a belt drive assembly for rotating the supporting rollers to feed the boxed products along the conveying surface.

More specifically, the supporting frame normally comprises two parallel, facing, horizontal beams, and the supporting rollers are positioned, parallel to one another and appropriately spaced apart, with the two axial ends hinged to rotate freely on the body of the beams, i.e. astride the two horizontal beams. In other words, the supporting rollers are fitted to the two horizontal beams to rotate about respective horizontal axes of rotation perpendicular to the longitudinal axes of the two beams.

Roller conveyors of the above type sometimes often comprise one or more movable stops, each of which, on command, arrests the loose boxed products along the conveying surface or corridor defined by the supporting rollers.

At present, the movable stops are fitted to the supporting frame, completely beneath the conveying surface, and are defined by a double-acting hydraulic or pneumatic piston positioned vertically beneath the supporting rollers, with the end of the output shaft facing upwards, i.e. facing the conveying surface above; and by a partition plate fixed vertically to the end of the output shaft of the piston.

Each movable stop is obviously fixed beneath the supporting frame, so that the corresponding partition plate slides inside the gap between two adjacent rollers, and the corresponding double-acting hydraulic or pneumatic piston can move the partition plate vertically between a rest position, in which the top lateral edge of the partition plate is located beneath the conveying surface, and a work position, in which the body of the partition plate projects at least partly above the conveying surface to arrest any boxed products.

Document DE 3 916 334 A1 discloses such a roller conveyor, which is conform to the preamble of claim 1.

Document DE 2 055 613 discloses a roller conveyor with a stop freely positionable along a horizontal beam, wherein the horizontal beam can be pivoted about a horizontal axis by means of an actuator between a work position and a rest position.

Roller conveyors of the above type have the major drawback of not being very versatile. Repositioning the movable stops on the conveyor, in fact, is a particularly painstaking job involving dismantling most of the conveyor, and, more importantly, considerable downtime, with all the drawbacks this involves in terms of cost.

It is an object of the present invention to provide a roller conveyor with movable product stops, which is more versatile and efficient than currently known types.

The object of the invention is achieved by the roller conveyor of claim 1.

A non-limiting embodiment of the present invention will be described by way of example with reference to the accompanying drawings, in which:
Figure 1 shows a side view, with parts removed for clarity, of a roller conveyor in accordance with the teachings of the present invention;
Figure 2 shows a plan view of the Figure 1 roller conveyor;
Figure 3 shows, with parts removed for clarity, a section along line III-III of the Figure 2 conveyor.

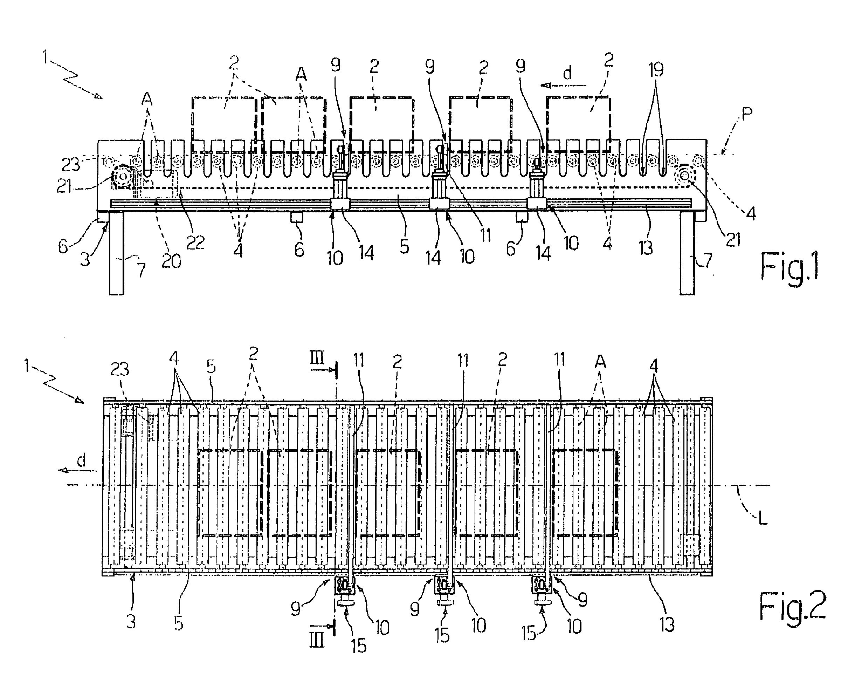

With reference to Figures 1, 2 and 3, number 1 indicates as a whole a roller conveyor which may be used to advantage for feeding a succession of boxed products 2 along a predetermined conveying surface P.

Roller conveyor 1 substantially comprises a supporting frame 3; and a number of product supporting and conveying rollers 4 fitted to supporting frame 3 to rotate freely, and arranged parallel and side by side on supporting frame 3 to define a preferably, though not necessarily, horizontal product conveying surface P. More specifically, supporting rollers 4 are arranged parallel and side by side on supporting frame 3 to define a product conveying corridor, along which products 2 are fed on conveying surface P in a predetermined direction d locally perpendicular to the axis of rotation A of each roller.

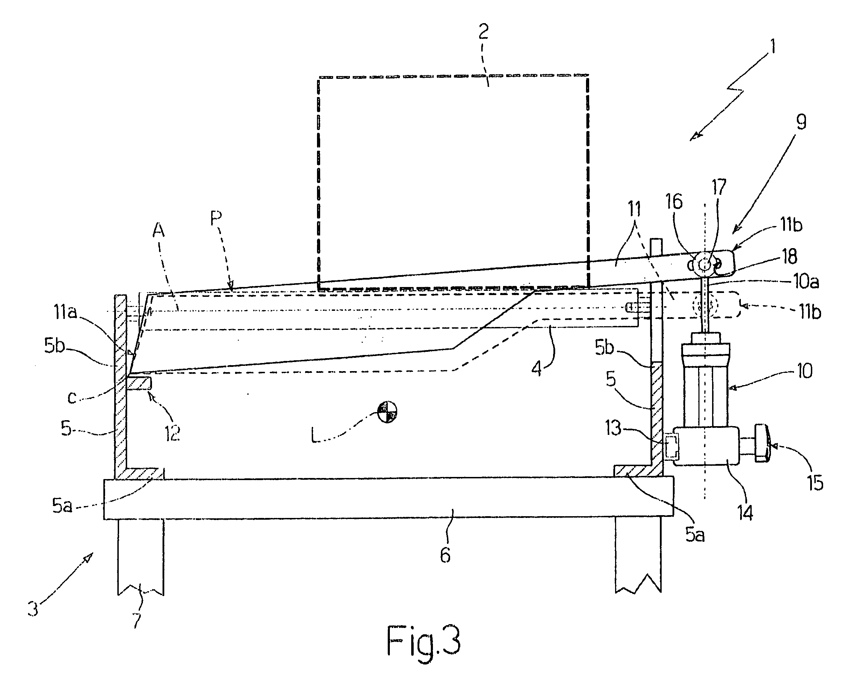

With reference to Figures 1, 2 and 3, supporting frame 3 comprises two horizontal beams 5 extending parallel and facing each other along the whole length of roller conveyor 1; a number of horizontal cross members 6 rigidly connecting the two horizontal beams 5; and a number of floor stands defined, in the example shown, by four legs or vertical posts 7 located at the ends of the two horizontal beams 5. More specifically, with reference to Figures 1 and 3, horizontal cross members 6 are defined, in the example shown, by rectangular-section metal bars or box sections, which are positioned parallel to conveying surface P, beneath rollers 4, and each of which is connected rigidly at both axial ends to the underside edges of the two horizontal beams 5, so as to form one body with horizontal beams 5; and each vertical post 7 is defined by a rectangular-section metal bar or box section, the top end of which is connected rigidly to horizontal beam 5 and preferably, though not necessarily, to a horizontal cross member 6.

In the example shown, the two horizontal beams 5 are defined by two L-section metal bars or angles extending parallel to the longitudinal axis L of roller conveyor 1, and arranged specularly facing each other so that the horizontal portions 5a of the two horizontal beams 5 are positioned facing each other and resting on horizontal cross members 6, while the vertical portions 5b of the two horizontal beams 5 are positioned parallel and facing each other to laterally define the product conveying corridor.

With reference to Figures 2 and 3, supporting rollers 4 are positioned astride the two horizontal beams 5, and are arranged parallel and appropriately spaced apart with respective axes of rotation A positioned horizontally and perpendicular to the longitudinal axes of the two horizontal beams 5, i.e. to the longitudinal axis L of roller conveyor 1. In the example shown, the two axial ends of each supporting roller 4 are each hinged to vertical portion 5b of a corresponding horizontal beam 5 with the interposition of a known roller bearing.

With reference to Figures 1, 2 and 3, roller conveyor 1 also comprises one or more movable stops 9, each of which provides, on command, for arresting products 2 travelling along the conveying corridor on supporting rollers 4.

With particular reference to Figure 3, each movable stop 9 comprises a linear actuator 10 fixed vertically to one of the two horizontal beams 5 of the frame, outside the product conveying corridor, i.e. on the opposite side of the body of horizontal beam 5 to supporting rollers 4, with its output shaft 10a facing upwards; and a substantially rectangular-section partition bar or wall 11 extending astride the two horizontal beams 5, in the gap defined by two adjacent rollers 4, and having a first end 11a resting on a horizontal beam 5, and a second end 11b hinged to the output shaft of linear actuator 10 so as to oscillate in a plane perpendicular to longitudinal axis L of roller conveyor 1.

More specifically, end 11a of partition bar or wall 11 rests by one edge on the horizontal beam 5 not fitted with linear actuator 10, so as to define a supporting point C, and oscillates freely about a reference axis through point C and parallel to longitudinal axis L of roller conveyor 1; and linear actuator 10 provides, on command, for lifting the second end 11b of partition bar or wall 11 between a rest position (shown by the dash line in Figure 3), in which partition bar or wall 11 is substantially horizontal with its top lateral edge just below conveying surface P, and a work position (shown by the continuous line in Figure 3), in which partition bar or wall 11 is tilted a predetermined angle with respect to conveying surface P, so that its body projects at least partly above conveying surface P to arrest products 2.

More specifically, in the example shown, end 11a of partition bar or wall 11 rests on a longitudinal projection 12 projecting from vertical portion 5b towards the other horizontal beam 5, and parallel to conveying surface P.

Alternatively, end 11a of partition bar or wall 11 may comprise a preferably, though not necessarily, hook-shaped projecting appendix which rests astride the top edge of flat vertical portion 5b of horizontal beam 5.

With reference to Figures 1, 2 and 3, linear actuator 10 is fitted to the body of horizontal beam 5 so as to be freely positionable in any position along horizontal beam 5.

In the example shown, vertical portion 5b of horizontal beam 5 has a longitudinal guide or rail 13 extending parallel to longitudinal axis L of roller conveyor 1; and the body of linear actuator 10 is fixed to a supporting carriage 14 mounted to run along longitudinal rail 13, and having manually operated locking means 15 for selectively locking carriage 14 integral with longitudinal rail 13, whatever position the carriage is in.

More specifically, in the example shown, linear actuator 10 is defined by a double-acting hydraulic or pneumatic piston 10, the outer casing of which is fixed to a skid or slide 14, which in turn is fixed to run along longitudinal rail 13, and has a manually operated lock screw 15 screwed inside the body of slide 14, so that the end of the screw can be positioned resting against the body of longitudinal rail 13 to prevent any movement of slide 14 along the rail.

As regards the connection between partition bar or wall 11 and linear actuator 10, in the example shown, the free end of output shaft 10a of double-acting hydraulic or pneumatic piston 10 has a bushing 16 fitted inside in rotary manner with the end of a hexagonal-headed screw 17 which engages a through slot 18 formed in the body of partition bar or wall 11.

With reference to the above, it should be pointed out that, linear actuator 10 and partition bar or wall 11 being located on opposite sides of horizontal beam 5, horizontal beam 5 comprises, in the example shown, a number of vertical through slots 19, each formed in vertical portion 5b of horizontal beam 5, in the gap between two supporting rollers 4. Partition bar or wall 11 slides into any through slot 19, so that end 11b is positioned, beyond the body of horizontal beam 5, at the end of output shaft 10a of linear actuator 10.

With reference to Figures 1 and 2, roller conveyor 1 preferably, though not necessarily, has a roller actuating assembly 20 which rotates rollers 4 about respective axes of rotation A to feed products 2 along conveying surface P.

More specifically, in the example shown, actuating assembly 20 is a known belt actuating assembly substantially comprising two return pulleys 21 fitted to supporting frame 3, beneath rollers 4 and at the two axial ends of horizontal beams 5, to rotate about respective axes of rotation parallel to axes A; a drive belt 22 looped about the two pulleys 21; a drive unit 23 connected mechanically to one of the two pulleys 21 to move drive belt 22; and a number of belt pressure pulleys (not shown) fitted in rotary manner to supporting frame 3, along the top branch of drive belt 22, to ensure drive belt 22 adheres to the outer surface of rollers 4.

Operation of roller conveyor 1 is easily deducible from the above description and as illustrated, with no further explanation required.

The advantages of roller conveyor 1 are obvious: movable stops 9 can be repositioned extremely quickly, thus greatly reducing downtime. In the example shown, each movable stop 9 can be repositioned rapidly by loosening lock screw 15; raising the entire partition bar or wall 11 above conveying surface P, by rotating it about the hinge at the end of output shaft 10a of linear actuator 10; moving the entire movable stop 9 along longitudinal rail 13 into the new position; and, finally, lowering partition bar or wall 11 back down so that end 11a rests on longitudinal projection 12.

Clearly, changes may be made to roller conveyor 1 as described herein without, however, departing from the scope of the present invention, which is defined by the appended claims.

## Claims

1. A roller conveyor (1) comprising a supporting frame (3) having a first and a second horizontal beam (5) arranged parallel and facing each other, a number of supporting rollers (4) mounted to rotate freely astride said first and said second horizontal beam (5) and arranged side by side to define a conveying surface (P) for products (2) in general, and at least one movable stop (9) for selectively arresting said products (2) along the conveying surface (P);
said movable stop (9) comprising a linear actuator (10) fixed to said first horizontal beam (5), on the opposite side to said second horizontal beam (5), and a partition bar or wall (11) which extends in the gap defined by two adjacent rollers (4); said partition bar or wall (11) having a first end (11a) and a second end (11b), and said second end (11b) being hinged to said linear actuator (10);
said linear actuator (10) being able to lift, on command, the second end (11b) of said partition bar or wall (11) so as to move the partition bar or wall (11) between a rest position in which the top lateral edge of said partition bar or wall (11) is located beneath said conveying surface (P), and a work position in which the body of said partition bar or wall (11) projects at least partly above said conveying surface (P);
said roller conveyor (1) being **characterized in that** said linear actuator (10) is fitted to the body of said first horizontal beam (5) so as to be freely positionable in any position along said first horizontal beam (5), and **in that** said partition bar or wall (11) extends astride of said two horizontal beams (5) with said first end (11a) resting on said second horizontal beam (5).

2. A roller conveyor as claimed in Claim 1, **characterized in that** said first horizontal beam (5) has a longitudinal guide (13), and said linear actuator (10) is fixed to a carriage (14) mounted to run along said longitudinal guide (13).

3. A roller conveyor as claimed in Claim 2, **characterized in that** said carriage (14) comprises locking means (15) for selectively making said carriage (14) integral with the longitudinal guide (13), whatever position the carriage is in.

4. A roller conveyor as claimed in any one of the foregoing Claims, **characterized in that** said second horizontal beam (5) has a longitudinal projection (12), and the first end (11a) of said partition bar or wall (11) rests on said longitudinal projection (12).

5. A roller conveyor as claimed in Claim 1, 2 or 3, **characterized in that** the first end (11a) of said partition bar or wall (11) has a projecting appendix which rests astride the top edge of said second horizontal beam (5).

6. A roller conveyor as claimed in any one of the foregoing Claims, **characterized in that** said first horizontal beam (5) has a number of vertical through slots (19), each formed in the body of said first horizontal beam (5), at the gap between two adjacent said rollers (4).

## Patentansprüche

1. Rollenförderer (1), der aufweist einen Tragrahmen (3) mit einem ersten und einem zweiten horizontalen Träger (5), die parallel und einander zugewandt angeordnet sind, mehrere Stützrollen (4), die angebracht sind, um sich frei rittlings auf dem ersten und zweiten horizontalen Träger (5) zu bewegen und die nebeneinander angeordnet sind, um allgemein eine Förderfläche (P) für Gegenstände (2) zu definieren, und wenigstens einen bewegbaren Stopp (9) zum selektiven Arretieren der Gegenstände (2) entlang der Förderfläche (P);
wobei der bewegbare Stopp (9) einen Linear-Betätiger (10) aufweist, der am ersten horizontalen Träger (5), auf der zum zweiten horizontalen Träger (5) abgewandten Seiten befestigt ist, und einen Trennbalken oder eine Trennwand (11), der bzw. die in die Aussparung ragt, die durch zwei benachbarte Rollen (4) definiert ist,
wobei der Linear-Betätiger (10) auf Befehl das den Trennbalken oder die Trennwand (11) anheben kann, um so den Trennbalken oder die Trennwand (11) zwischen einer Ruheposition, in der die obere Seitenkante des Trennbalkens oder der Trennwand (11) sich unterhalb der Förderfläche (P) befindet und einer Betriebsposition, in der der Körper des Trennbalkens oder der Trennwand (11) wenigstens teilweise über die Förderfläche (P) heraussteht, zu bewegen, wobei des Trennbalkens oder der Trennwand (11) mit ein erstes Ende (11a) und ein zweites Ende (11b) ist, und der zweites Ende (11b) gelenkig mit dem Linear-Betätiger (10) verbunden ist,
wobei der Rollenförderer (1) **dadurch gekennzeichnet ist, dass** der zweites Ende (11b) aus der Linear-Betätiger (10) am Körper des ersten horizontalen Trägers (5) so befestigt ist, dass er frei in einer beliebigen Position entlang des ersten horizontalen Trägers (5) positionierbar ist, und dass der Trennbalken oder die Trennwand (10) sich rittlings auf den beiden horizontalen Trägern (5) erstreckt, wobei der erstes Ende (11a) auf dem zweiten horizontalen Träger(5) aufliegt.

2. Rollenförderer gemäß Anspruch 1, **dadurch gekennzeichnet, dass** der erste horizontale Träger (5) eine Längsführung (13) aufweist und der Linear-Betätiger (10) an einem Schlitten (14) befestigt ist, der so angebracht ist, dass er entlang der Längsführung (13) läuft.

3. Rollenförderer gemäß Anspruch 2, **dadurch gekennzeichnet, dass** der Schlitten (14) Sperrmittel (15) zum selektiven Festverbinden des Schlittens (14) mit der Längsführung (13) aufweist, unabhängig davon, in welcher Position sich der Schlitten befindet.

4. Rollenförderer gemäß einem der vorhergehenden Ansprüche, **dadurch gekennzeichnet, dass** der zweite horizontale Träger (5) einen Längsvorsprung (12) aufweist und das erste Ende (11a) des Trennbalkens oder der Trennwand (11) auf dem Längsvorsprung (12) aufliegt.

5. Rollenförderer gemäß Anspruch 1, 2 oder 3, **dadurch gekennzeichnet, dass** das erste Ende (11a) des Trennbalkens oder der Trennwand (11) einen hervorstehenden Ansatz aufweist, der rittlings auf der Oberkante des zweiten horizontalen Trägers (5) aufliegt.

6. Rollenförderer gemäß einem der vorhergehenden Ansprüche, **dadurch gekennzeichnet, dass** der erste horizontale Träger (5) mehrere vertikal durchgehende Schlitze (19) aufweist, die jeweils im Körper des ersten horizontalen Trägers (5) an der Aussparung zwischen zwei benachbarten Rollen (4) ausgebildet sind.

## Revendications

1. Convoyeur à rouleaux (1) comprenant un cadre de support (3) ayant une première et une seconde poutrelles horizontales (5) disposées parallèlement et l'une en face de l'autre, une pluralité de rouleaux de support (4) montés de façon à tourner librement à cheval sur ladite première et ladite seconde poutrelles horizontales (5) et disposés côte à côte pour définir une surface de convoyage (P) pour des produits (2) en général, et au moins une butée mobile (9) pour arrêter sélectivement lesdits produits (2) le long de la surface de convoyage (P) ;
ladite butée mobile (9) comprenant un actionneur linéaire (10) fixé à ladite première poutrelle horizontale (5), sur le côté opposé de ladite seconde poutrelle horizontale (5) et une barre ou paroi de séparation (11) qui s'étend dans l'intervalle défini par deux rouleaux adjacents (4) ; ladite barre ou paroi de séparation (11) ayant une première extrémité (11a) et une seconde extrémité (11b), et ledit seconde extrémité (11b) étant articulée audit actionneur linéaire (10) ;
ledit actionneur linéaire (10) étant capable de lever, sur commande, le seconde extrémité (11b) de ladite barre ou paroi de séparation (11), de façon à déplacer la barre ou paroi de séparation (11) entre une position de repos, dans laquelle le bord latéral supérieur de ladite barre ou paroi de séparation (11) est situé sous ladite surface de convoyage (P), et une position de travail dans laquelle le corps de ladite barre ou paroi de séparation (11) se projette au moins partiellement au dessus de ladite surface de convoyage (P) ;
ledit convoyeur à rouleau (1) étant **caractérisé en ce que** ledit actionneur linéaire (10) est adapté au corps de ladite première poutrelle horizontale (5), de façon à être librement positionnable dans une position quelconque le long de ladite première poutrelle horizontale (5), et **en ce que** ladite barre ou paroi de séparation (11) s'étend à cheval sur lesdites deux poutrelles horizontales (5) avec ledit première extrémité (11a) reposant sur ladite seconde poutrelle horizontale (5).

2. Convoyeur à rouleau selon la revendication 1, **caractérisé en ce que** ladite première poutrelle horizontale (5) a un guide longitudinal (13) et ledit actionneur linéaire (10) est fixé à un chariot (14) monté de façon à se déplacer le long dudit guide longitudinal (13).

3. Convoyeur à rouleau selon la revendication 2, **caractérisé en ce que** ledit chariot (14) comprend des moyens de verrouillage (15) pour rendre sélectivement 20 ledit chariot (14) solidaire avec le guide longitudinal (13), quelle que soit la position du chariot.

4. Convoyeur à rouleau selon l'une quelconque des revendications précédentes, **caractérisé en ce que** ladite seconde poutrelle horizontale (5) a une saillie longitudinale (12), et la première extrémité (11a) de ladite barre ou paroi de séparation (11) repose sur ladite saillie longitudinale (12).

5. Convoyeur à rouleau selon la revendication 1, 2 ou 3, **caractérisé en ce que** la première extrémité (11a) de ladite barre ou paroi de séparation (11) présente un appendice saillant qui repose à cheval sur le bord supérieur de ladite seconde poutrelle horizontale (5).

6. Convoyeur à rouleau selon l'une quelconque des revendications précédentes, **caractérisé en ce que** ladite première poutrelle horizontale (5) a une pluralité de fentes passantes verticales (19), chacune étant formée dans le corps de ladite première poutrelle horizontale (5), dans l'intervalle entre deux desdits rouleaux adjacents (4).
